# EUROPEAN PATENT SPECIFICATION

(11) **EP 1 605 608 B1**
(45) Date of publication and mention of the grant of the patent: **22.08.2007**
(21) Application number: 04291468.9
(22) Date of filing: 11.06.2004
(51) Int. Cl.: H04B 7/185

(54) **Mobile communication system for use on board a ship using a satellite link.**
Mobile Kommunikationsanordnung für Schiffe mit einer Satellitenverbindung
Système de communication mobile pour vaisseau utilisant une liaison satellitaire

(43) Date of publication of application: 14.12.2005
(60) Divisional application: 07112555.3
(73) Proprietor: Geolink, 75008 Paris (FR)
(72) Inventor: Nomine-Beguin, Roch-Alexandre, 60550 Verneuil en Halatte (FR)
(74) Representative: Texier, Christian

(56) References cited:
- GB-A- 2 357 942
- US-A- 5 455 964
- US-A- 5 913 164
- US-A1- 2003 214 966

## Description

The invention relates to the field of mobile communication networks. In particular, the invention relates to mobile communication systems on board ships.

It is known from document WO 02/21725 (published on March 14, 2002) a telecommunication system for use on board a ship for setting up communications with ground networks. The telecommunication system includes base transceiver stations (BTS) for setting up radio links with mobile stations located on board the ship and a satellite antenna for setting up communications between the on board telecommunication system and a ground station via a satellite link. See as well US 2003/0214966 A1 (Taylor) published 20-11-2003.

Thanks to these systems, users boarding the ship should be able to use their own mobile phone.

However, until now, these systems have not been operated in a satisfactory way. It appears indeed that these systems cannot set up communications in a reliable and repeatable manner.

One reason is that mobile networks are often not compatible with satellite links.

Mobile networks are configured to operate in an acknowledged mode. According to the acknowledged mode, frames sent by a mobile phone through the telecommunication system must be acknowledged by the receiver to ensure that the frames have been correctly received. Acknowledgement is achieved by the receiver sending back to the mobile phone an acknowledgement message.

The mobile phone is able to repeat non acknowledged frame, if any. To that end, frames are stored in a buffer of the mobile phone until they are acknowledged, so as to be available if repetition is needed.

However, the delay during which the mobile phone can receive an acknowledgement message is limited. For instance, in usual GSM networks using the CCIT Signalling System no. 7 protocol (SS7), the link quality monitoring is done in such a way that the link is declared out of order when the delay for receiving an acknowledgement message is greater than 750 ms.

In satellite communication systems, the time needed to get an acknowledgement message is often greater than this delay. In a typical VSAT (Very Small Aperture Terminal) communication system such as the one described in WO 02/21725, the time needed for sending a frame and receiving an acknowledgement message is of the order of 780 ms. The satellite link is too slow. It follows that a communication cannot be set up.

The problem solved by the invention is to modify existing mobile networks in order to make them compatible with satellite links.

This problem is solved by a telecommunication system according to claim 1.

In such a telecommunication system, an acknowledgement device is able to generate a dummy acknowledgement message and to send it to the base transceiver station, so that the communication is not declared out of order.

Other features and advantages of the invention will appear in the following description. Embodiments of the invention will be described with reference to the drawings, in which:
- figure 1 is a schematic diagram showing one possible embodiment of the invention wherein the telecommunication network is of the GSM type,
- figures 2 and 3 are schematic diagrams showing two other embodiments, as variants of the telecommunication network of figure 1,
- figure 4 is a schematic diagram showing different parts of the acknowledgement devices used in the telecommunication network of figure 1,
- figures 5 and 6 are a schematic diagrams showing two embodiments of switching means adapted for selectively activating or inactivating the telecommunication network depending on the closeness of another telecommunication network located on the ground.

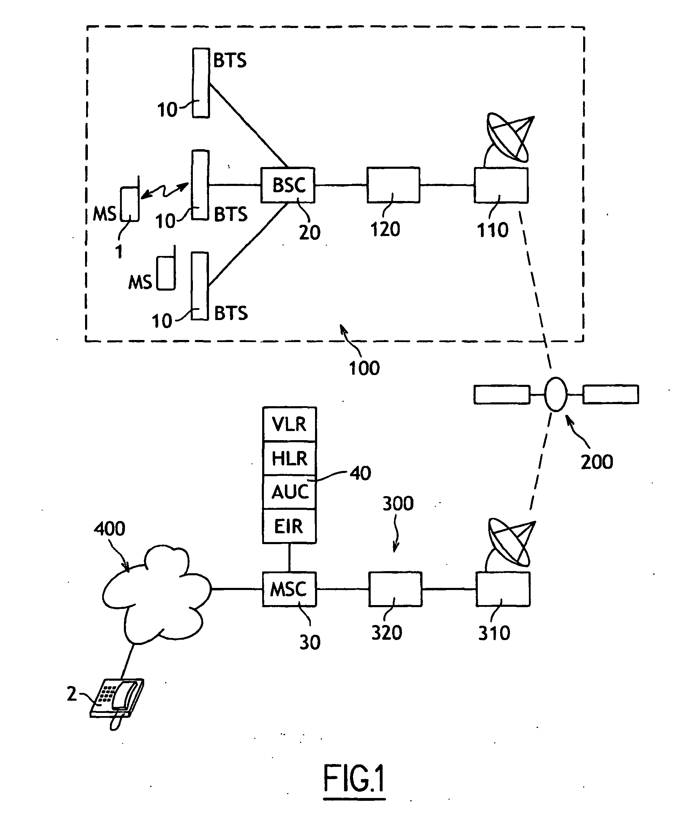

On figure 1, the telecommunication network shown comprises an on-board part 100, a ground part 300 and a satellite 200 for providing a link between the on board part 100 and the ground part 300.

The on-board part 100 is located on board a ship and comprises an on board telecommunication system. The on-board telecommunication system includes a plurality of base transceiver station (BTS) 10 comprising radio transmission and reception devices for setting up radio links with mobile stations (MS) 1 located on board the ship, a base station controller (BSC) 20 connected to the plurality of base transceiver stations 10 and a satellite station 110 comprising a satellite antenna. The satellite station 110 provides an interface between the on-board telecommunication system and the satellite 200.

The on-board telecommunication system also includes an acknowledgement device 120 interposed between the base station controller 20 and the satellite station 110.

The ground part 200 of the telecommunication network is located on the ground. It comprises a satellite station 310 comprising a satellite antenna and a mobile-service switching centre (MSC) 30 which main function is to coordinate the setting up of calls to and from the on-board telecommunication system. The mobile-service switching centre (MSC) 30 is connected to public network 400 and other mobile networks. The mobile-service switching centre (MSC) 30 has access to data bases 40 necessary to provide tracking and security functions. These data bases 40 include an Equipment Identity Register (EIR), an Authentication Centre (AuC), a Home Location Register (HLR) and a Visitors Location Register (VLR).

The ground part 300 of the telecommunication system also includes an acknowledgement device 320 interposed between the satellite station 310 and the mobile-service switching centre (MSC) 30.

In operation, if a user of a mobile station (MS) 1 located on board the ship decides to call a person located on the ground, the user dials the number of the said person. The mobile station (MS) 1 then sends a channel request message to the appropriate base transceiver station (BST) 10. The base transceiver station (BST) 10 transmits the request to the base station controller (BSC) 20. Upon receiving the request, the base station controller (BSC) 20 activates a channel in the base transceiver station (BST) 10 and when the base transceiver station (BST) 10 has acknowledged this activation, sends an assignment message to the mobile station (MS) 1.

Once the mobile station (MS) 1 has received the assignment message, the mobile station (MS) 1 sends a frame containing a setup message on the dedicated channel. This frame containing the setup is sent to the base transceiver station (BST) 10, it is passed to the base station controller (BSC) 20 and then to the ground part 300 of the network through the on board satellite station 110 which send it to the ground satellite station 310 via the satellite link. The mobile-services switching centre (MSC) 30 routes the frame to the person to be called 2 through the ground network 400. During that time, the mobile station (MS) 1 is waiting for an acknowledgement signal coming back from the network.

The acknowledgement device 120 located on board the ship between the base station controller (BSC) 20 and the satellite station 110 is adapted for generating automatically a setup acknowledgement signal when it receives the frame containing the setup message and forwards the frame to the satellite station 110. The acknowledgement device 120 transmits the setup acknowledgement signal back to the base transceiver station (BST) 10 in response to the frame containing the setup message.

The setup acknowledgement signal generated by the acknowledgement device 120 constitutes a dummy setup acknowledgement which allows to maintain the communication link between the mobile station (MS) 1 and the receiver 2. The delay for the frame containing the setup message to be acknowledged by the acknowledgement device 120 is lower than the failure delay provided by the network. For instance, the acknowledgement delay provided by the acknowledgement device is lower than 750 ms in case of a GSM network using the SS7 protocol.

When the communication has been set up between a mobile station (MS) 1 located on board the ship and a receiver 2 located on ground, the same acknowledgement method is used to acknowledge receipt of frames between the base station controller (BSC) 20 and the mobile-services switching centre (MSC) 30. The acknowledgement device 120 is adapted for generating automatically acknowledgement signals when it receives frames. The acknowledgement device 120 transmits the acknowledgement signals back to the base station controller (BSC) 20 in response to the frames.

The acknowledgement signals generated by the acknowledgement device 120 can take several forms depending on the protocol used by the network. For instance, according to MTP2 protocol (Message Transfer Part no.2 protocol), each acknowledgement signal contain the reference number of the associated frame to be acknowledged.

In the same way, when the receiver 2 located on the ground sends frames to the mobile station (MS) 1 located on board the ship, the acknowledgement device 320 located on the ground automatically generates corresponding acknowledgement signals. The acknowledgement device 320 located on the ground sends acknowledgement signals to the mobile-services switching centre (MSC) 30.

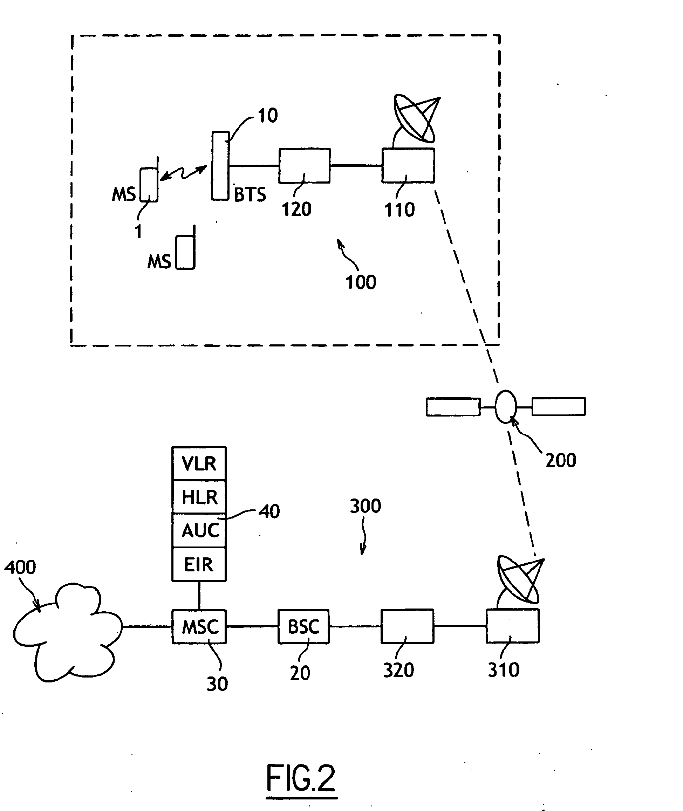

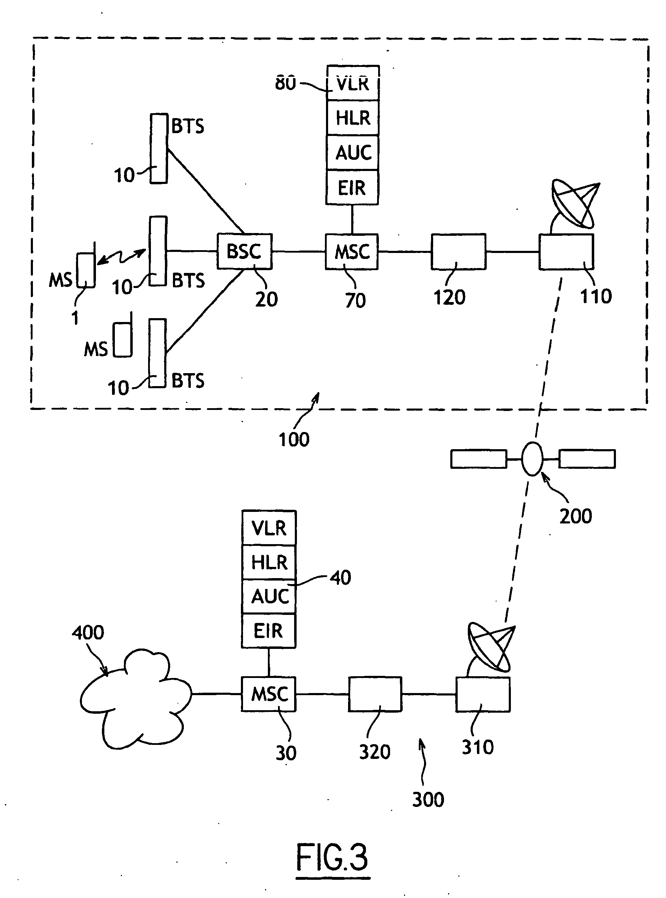

Figures 2 and 3 are schematic diagrams showing two variants of the telecommunication network of figure 1.

On figure 2, the base station controller (BSC) 20 is not located on board the ship but on ground. According to this arrangement, a base station transceiver (BST) 10 located on board the ship is directly connected with the satellite station 110 through the acknowledgement device 120. The ground acknowledgement device 320 is located between the ground satellite station 310 and the base station controller (BSC) 320.

On figure 3, a mobile-service switching centre (MSC) 70 and associated data bases 80 are located on board the ship. According to this embodiment, the on-board acknowledgement device 120 is located between the on-board satellite station 110 and the mobile-service switching centre (MSC) 70.

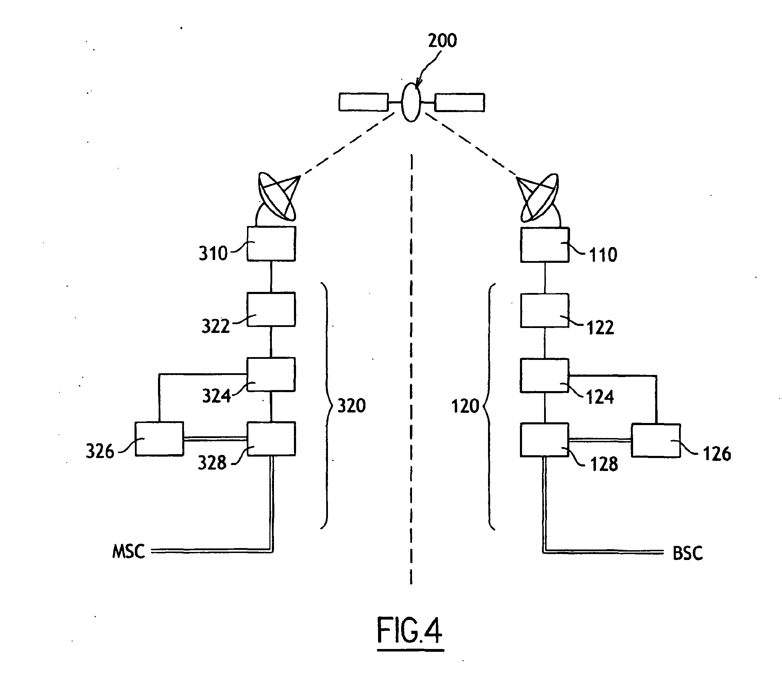

Figure 4 shows details of the acknowledgement devices 120 and 320 used in the telecommunication network of figure 1.

The acknowledgement devices 120 and 320 are arranged so as to avoid maintaining a permanent trunk of voice channels between the mobile service switching centre (MSC) located on the ground and the base station controller (BSC) on-board the ship. Permanent trunk of voice channels generally used in terrestrial mobile networks is incompatible with the use of a satellite link. Even if voice activity detection device (VAD) is used to suppress silences, such a VAD device generates a permanent consumption of bandwidth.

In order to reduce the bandwidth, the acknowledgement devices 120 and 320 are able to generate connect and release messages for setting up and releasing voice on Internet Protocol channels (VoIP) on request.

To that end, the acknowledgement device 120 located on board the ship comprises a serial router 122, an Ethernet switch 124, a VoIP gateway 126 and an SS7/IP gateway 128.

The acknowledgement device 320 located on the ground also comprises a serial router 322, an Ethernet switch 324, a VoIP gateway 326 and an SS7/IP gateway 328.

Both acknowledgement devices are composed with the same elements and operate in the same way.

As the network is a GSM network, the signals transmitted between the BSC and the MSC has a bandwidth of 2 Mbit/s. This bandwidth must be reduced in order to transmit the communication by the satellite link. The signals transmitted between the BSC and the MSC comprises one signalling channel dedicated to signalling data (channel called H1) and 29 voice channels (channels called H2 to H31).

The SS7/IP gateway 128 is adapted for separating the signalisation channel (H1) from the voice channels (H2 to H31). SS7/IP gateway 128 is adapted for transmitting the voice signals to the VoIP gateway 126 and for encapsulating the signalling data into IP packets before transmitting it to Ethernet switch 124.

The SS7/IP gateway 128 is also adapted for generating and sending acknowledgement signals back to the BSC when the SS7/IP gateway 128 receives signals from the BSC.

The VoIP gateway 126 is adapted for compressing the voice channels having a bandwidth of 2 Mbit/s received from the SS7/IP 128 gateway and to convert it into IP packets having a bandwidth of 24 kbit/s.

The Ethernet switch 124 is adapted for combining signalling data received from the SS7/IP gateway 128 and voice data received from the VoIP gateway 126 and to transmit them to the serial router 122. The serial router 122 provides an interface between TCP/IP (Transmission Control Protocol / Internet Protocol) and the serial satellite link.

All the elements forming the acknowledgement device 120 are reversible: they operate in both senses.

The acknowledgement device 320 is similar to the acknowledgement device 120 and operates in the same way. In the acknowledgement device 320, the SS7/IP gateway 328 is adapted for generating and sending acknowledgement signals back to the MSC when the SS7/IP gateway 328 receives signals from the MSC.

One problem with networks comprising a telecommunication system located on board a ship is concerned with interference between the on-board telecommunication system and other mobile networks located on ground. This problem arises in particular when the ship comes near a coast in an area covered by another mobile network.

It is desirable to avoid such interferences and to allow the mobile stations (MS) located on board the ship to set up communications with the mobile networks located on the ground.

This problem can be solved thanks to switching means adapted for selectively activating or inactivating the on board telecommunication system depending on the closeness of a telecommunication network located on the ground.

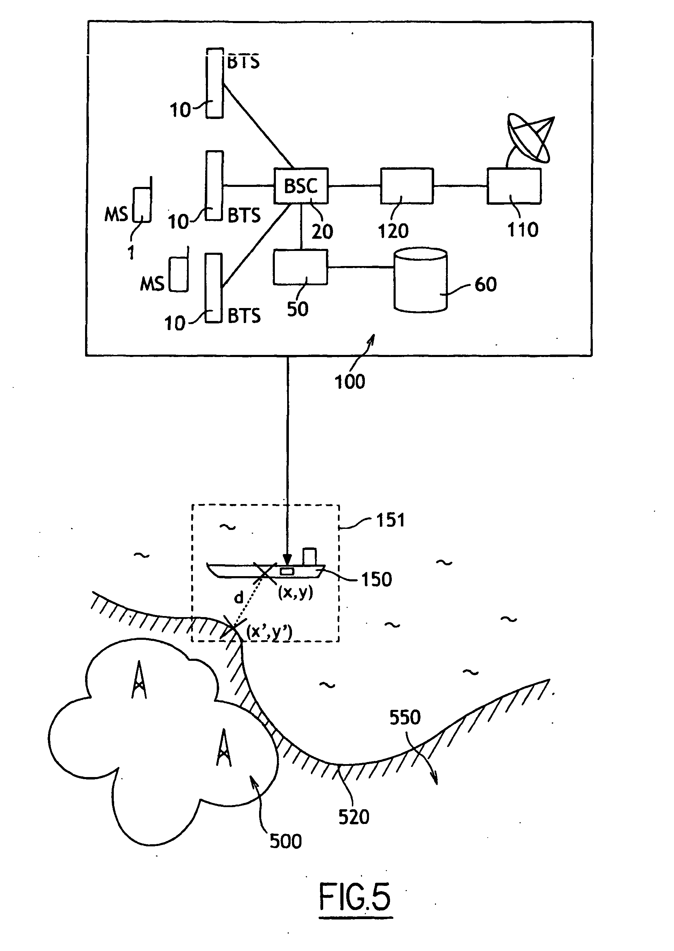

According to a first embodiment illustrated on figure 5, the switching means are adapted for calculating the distance d between the position of the ship and the closest point of a coast and for selectively activating or inactivating the on-board part of the telecommunication network depending on the calculated distance.

The on-board part 100 of the telecommunication network can comprise such switching means 50 for automatically disabling the telecommunication network when the ship 150 is located in an area close to a coast. The switching means 50 are able to calculate the distance d between the position (x, y) of the ship 150 and the closest point (x', y') located on the ground 550. The coordinates (x, y) of the ship (x, y) is for instance provided by a positioning system (such as a GPS system included into the VSAT system) and the coordinates (x', y') of the coast line points are known in advance. The coordinates of the coast line points are for example provided by the USGS (United States Geological Survey).

At regular time intervals, the switching means 50 calculates the distance d between the position (x, y) of the ship 150 and a set of points located on the coast line 520 in a neighbourhood of the ship 150. The neighbourhood of the ship 150 is for instance defined by a square area 151 centred on the position (x, y) of the ship 150 and having sides extending on about 1 degree longitude and 1 degree latitude.

If there is no point of a coast line inside the neighbourhood 150 or if the distance between the ship 150 and the closest point (x', y') located in the neighbourhood 151 is greater than a first threshold (for instance 14 kilometres), then the switching means 50 activates the on-board telecommunication system or keep the on-board telecommunication system in an active state.

If the distance d between the ship 150 and the closest point (x, y) located in the neighbourhood is less than a second threshold (for instance 12 kilometres), then the switching means 50 disables the on-board telecommunication system or keep the on-board telecommunication system in an inactive state.

Thanks to the switching means 50, the network is selectively set into an active or inactive state depending on the closeness of a coast, thereby avoiding interference with other telecommunication networks 500 located on the ground.

Data relating to the coordinates (x, y) of the ship 150 and the state of the on-board telecommunication system are stored in a data base 60 located on board the ship 150. These data can be copied and sent to a data base located on the ground.

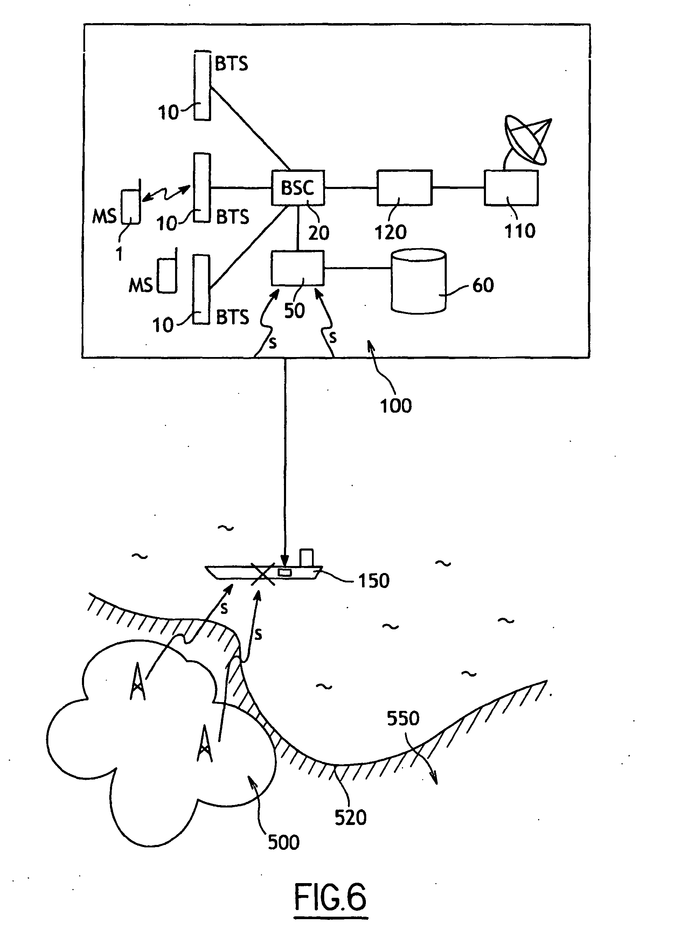

According to a second embodiment illustrated on figure 6, the switching means are adapted for measuring the intensity level of carrier signals s having frequencies corresponding to communication channels of the on-board telecommunication system and for selectively activating or inactivating the on-board telecommunication system depending on the intensity level measured.

The on-board part 100 of the telecommunication network can comprise such switching means 50 for automatically disabling the telecommunication network when the reception level of a mobile network 500 located on the ground is sufficiently high.

The switching means 50 include a spectrum analyser that operates at frequencies corresponding to communication channels of the on-board telecommunication system. For instance, in case the on board telecommunication system is of the GSM type, the spectrum analyser measures the intensity level carrier signals at frequencies around 900 MHz.

If the intensity level measured by the spectrum analyser at a frequency corresponding to a channel of the on-board telecommunication system is less than a threshold, then the switching means 50 activates the on-board telecommunication system or keep the on-board telecommunication system in an active state.

If the intensity level measured by the spectrum analyser at a frequency corresponding to a channel of the on-board telecommunication system is greater than the threshold, then the switching means 50 disables the on-board telecommunication system or keep the on-board telecommunication system in an inactive state.

Thanks to the switching means 50, the on-board telecommunication system is selectively set into an active or inactive state depending on the closeness of another mobile network 500, thereby avoiding interference with telecommunication networks located on the ground.

In a variant of this second embodiment, the switching means 50 does not activate or inactivate the on-board telecommunication system, but change the communication channels frequencies of the on-board telecommunication system. The communication channel frequencies are changed so that they do not coincide with communication channels frequencies already used by a mobile network 500 located on the ground 550.

When the on-board telecommunication system is inactivated or when its channel frequencies are changed, current communications from mobile station (MS) 1 located on-board the ship 150 are automatically directed through a telecommunication system 500 located on the ground by directed handover.

## Claims

1. A telecommunication system for use on board a ship for setting up communications with ground networks (400), the telecommunication system including at least one on board base transceiver station (10) for setting up radio links with mobile stations (1) located on board the ship and an on board satellite station (110) for setting up communications between the on board telecommunication system and a ground station (310) via a satellite link,
**characterized in that** it also comprises an on board acknowledgment device (120) adapted for generating and transmitting an acknowledgement signal to the on board base transceiver station (10) in response to a mobile station (1) located on board the ship sending a frame to be transmitted by the telecommunication system to the ground station (310).

2. The telecommunication system according to claim 1, including a base station controller (20).

3. The telecommunication system according to claim 2, also including a mobile-service switching centre (70).

4. The telecommunication system according to one of claims 1 to 3, wherein the acknowledgement device (120) is adapted for generating a setup acknowledgement signal in response to the mobile station (1) sending a frame containing a setup message.

5. The telecommunication system according to one of claims 1 to 4, wherein the acknowledgement device (120) is adapted for generating an acknowledgement signal according to MTP2 protocol.

6. The telecommunication system according to one of claims 1 to 4, wherein the acknowledgement device (120) is adapted for generating and transmitting an acknowledgement signal in an acknowledgement delay lower than the failure delay provided by a protocol used by the telecommunication system.

7. The telecommunication system according to claim 6, wherein the acknowledgement delay provided by the acknowledgement device is lower than 750 ms.

8. The telecommunication system according to one of claims 1 to 7, further comprising switching means (50) adapted for selectively activating or inactivating the telecommunication system depending on closeness of a telecommunication network (500) located on the ground (550).

9. The telecommunication system according to claim 8, wherein the switching means (50) are adapted for calculating the distance (d) between the position (x, y) of the ship (150) and a closest point (x', y') of the ground (550) and for selectively activating or inactivating the telecommunication system depending on the calculated distance (d).

10. The telecommunication system according to claim 9, wherein the switching means (50) are adapted for activating the telecommunication system or keeping the telecommunication system in an active state if the distance (d) between the ship and the closest point (x', y') on the ground (550) is greater than a first threshold.

11. The telecommunication system according to claim 10, wherein the first threshold is of the order of 14 kilometres.

12. The telecommunication system, according to claim 8 to 11, wherein the switching means (50) are adapted for disabling the telecommunication system or keeping the telecommunication system in an inactive state if the distance (d) between the ship (150) and the closest point (x', y') on the ground (550) is less than a second threshold.

13. The telecommunication system, according to claim 12, wherein the second threshold is of the order of 12 kilometres.

14. The telecommunication system according to claim 8, wherein the switching means (50) are adapted for measuring an intensity level of carrier signals at frequencies corresponding to communication channels of the telecommunication system and for selectively activating or inactivating the telecommunication system depending on the intensity level measured.

15. The telecommunication system according to claim 14, wherein the switching means (50) are adapted for activating the telecommunication system or keeping the telecommunication system in an active state if the intensity level of the carrier signal is less than a threshold.

16. The telecommunication system according to one of claims 14 or 15, wherein the switching means (50) are adapted for disabling the telecommunication system or keeping the telecommunication system in an inactive state if the intensity level of carrier signals is greater than a threshold.

17. The telecommunication system according to one of claims 1 to 7, further comprising switching means (50) adapted for changing communication channels frequencies of the telecommunication system so that the channel frequencies of the telecommunication system do not coincide with channels frequencies already used by a mobile network (500) located on the ground (550).

18. A telecommunication system (300) for use on the ground comprising a satellite station (310) for setting up communication between a ground network (400) and a telecommunication system on board a ship via a satellite link,
**characterized in that** it also comprises a ground acknowledgment device (320) adapted for generating and transmitting acknowledgement signals to a ground network (400) in response to a terminal (2) located on ground sending a frame to be transmitted by the ground station (300) to the on board telecommunication system.

19. The telecommunication system (300) according to claim 18, including a base station controller (20).

20. The telecommunication system according to claim 19, also including a mobile-service switching centre (30).

21. The telecommunication system according to one of claims 18 to 20, wherein the acknowledgement device (320) is adapted for generating an acknowledgement signal according to MTP2 protocol.

22. The telecommunication system according to one of claims 18 to 21, wherein the acknowledgement device (320) is adapted for generating and transmitting an acknowledgement signal in an acknowledgement delay lower than the failure delay provided by a protocol used by the telecommunication system.

23. The telecommunication system according to claim 22, wherein the acknowledgement delay provided by the acknowledgement device is lower than 750 ms.

24. A method for setting up communications between a mobile station (1) located on board a ship and a ground network (400) via a satellite link comprising the following steps:
- the mobile station (1) sends a frame to a base transceiver station (10) of a telecommunication system on board the ship,
- the on board telecommunication system transmit the frame to the ground network (400) via the satellite link,
**characterized in that** it also comprises the flowing step:
- an acknowledgement device (120) forming part of the on board telecommunication system generates and transmits an acknowledgement signal to the base transceiver station (20).

## Patentansprüche

1. Telekommunikationssystem zur Verwendung an Bord eines Schiffs zum Herstellen von Kommunikation mit Bodennetzen (400), wobei das Telekommunikationssystem mindestens eine Bord-Basis-Sende/Empfänger-Station (10) zum Herstellen von Funkverbindungen mit an Bord des Schiffs befindlichen Mobilstationen (1) und eine Bord-Satellitenstation (110) zum Herstellen von Kommunikation zwischen dem Bord-Telekommunikationssystem und einer Bodenstation (310) über eine Satellitenverbindung enthält,
**dadurch gekennzeichnet, dass** es auch eine Bord-Empfangsbestätigungseinrichtung (120) umfaßt, die geeignet ist zum Erzeugen und Senden eines Empfangsbestätigungssignals zu der Bord-Basis-Sende/Empfänger-Station (10) in Antwort auf eine an Bord des Schiffs befindliche Mobilstation (1), die einen über das Telekommunikationssystem zu der Bodenstation (310) zu übertragenden Rahmen sendet.

2. Telekommunikationssystem nach Anspruch 1, das eine Basisstationssteuereinheit (20) enthält.

3. Telekommunikationssystem nach Anspruch 2, das auch eine Mobildienst-Schaltzentrale (70) enthält.

4. Telekommunikationssystem nach einem der Ansprüche 1 bis 3, bei dem die Empfangsbestätigungseinrichtung (120) geeignet ist zum Erzeugen eines Setup-Empfangsbestätigungssignals in Antwort auf die einen eine Setup-Nachricht enthaltenden Rahmen sendende Mobilstation (1).

5. Telekommunikationssystem nach einem der Ansprüche 1 bis 4, bei dem die Empfangsbestätigungseinrichtung (120) geeignet ist zum Erzeugen eines Empfangsbestätigungssignals gemäß dem MTP2-Protokoll.

6. Telekommunikationssystem nach einem der Ansprüche 1 bis 4, bei dem die Empfangsbestätigungseinrichtung (120) geeignet ist zum Erzeugen und Senden eines Empfangsbestätigungssignals binnen einer Empfangsbestätigungsverzögerung, die kleiner ist als die Fehlfunktionsverzögerung, die durch ein von dem Telekommunikationssystem verwendetes Protokoll vorgesehen ist.

7. Telekommunikationssystem nach Anspruch 6, bei dem die von der Empfangsbestätigungseinrichtung vorgesehene Empfangsbestätigungsverzögerung kleiner als 750 ms ist.

8. Telekommunikationssystem nach einem der Ansprüche 1 bis 7, weiterhin enthaltend eine Schalteinrichtung (50), die vorgesehen ist zum wahlweisen Aktivieren oder Inaktivieren des Telekommunikationssystems abhängig von der Nähe eines am Boden (550) befindlichen Telekommunikationsnetzes (500).

9. Telekommunikationssystem nach Anspruch 8, bei dem die Schalteinrichtung (50) geeignet ist zum Berechnen der Entfernung (d) zwischen der Position (x, y) des Schiffs (150) und einem nächsten Punkt (x', y') am Boden (550) und zum wahlweisen Aktivieren oder Inaktivieren des Telekommunikationssystems abhängig von der berechneten Entfernung (d).

10. Telekommunikationssystem nach Anspruch 9, bei dem die Schalteinrichtung (50) geeignet ist, das Telekommunikationssystem zu aktivieren oder das Telekommunikationssystem in einem aktiven Zustand zu halten, wenn die Entfernung (d) zwischen dem Schiff und dem nächsten Punkt (x', y') am Boden (550) größer als ein erster Schwellwert ist.

11. Telekommunikationssystem nach Anspruch 10, bei dem der erste Schwellwert von der Größenordnung von 14 Kilometern ist.

12. Telekommunikationssystem nach Anspruch 8 bis 11, bei dem die Schalteinrichtung (50) geeignet ist, das Telekommunikationssystem außer Betrieb zu setzen oder das Telekommunikationssystem in einem inaktiven Zustand zu halten, wenn die Entfernung (d) zwischen dem Schiff (150) und dem nächsten Punkt (x', y') am Boden (550) kleiner als ein zweiter Schwellwert ist.

13. Telekommunikationssystem nach Anspruch 12, bei dem der zweite Schwellwert von der Größenordnung von 12 Kilometern ist.

14. Telekommunikationssystem nach Anspruch 8, bei dem die Schalteinrichtung (50) geeignet ist zum Messen eines Intensitätspegels des Trägersignals bei Frequenzen, die Kommunikationskanälen des Telekommunikationssystems entsprechen, und zum wahlweisen Aktivieren oder Inaktivieren des Telekommunikationssystems abhängig von dem gemessenen Intensitätspegel.

15. Telekommunikationssystem nach Anspruch 14, bei dem die Schalteinrichtung (50) geeignet ist, das Telekommunikationssystem zu aktivieren oder das Telekommunikationssystem in einem aktiven Zustand zu halten, wenn der Intensitätspegel des Trägersignals kleiner als ein Schwellwert ist.

16. Telekommunikationssystem nach einem der Ansprüche 14 oder 15, bei dem die Schalteinrichtung (50) geeignet ist, das Telekommunikationssystem außer Betrieb zu setzen oder das Telekommunikationssystem in einem inaktiven Zustand zu halten, wenn der Intensitätspegel des Trägersignals größer als ein Schwellwert ist.

17. Telekommunikationssystem nach einem der Ansprüche 1 bis 7, weiterhin enthaltend eine Schalteinrichtung (50), die dazu geeignet ist, Kommunikationskanalfrequenzen des Telekommunikationssystems so zu ändern, dass die Kanalfrequenzen des Telekommunikationssystems nicht mit Kanalfrequenzen zusammenfallen, die schon von einem am Böden (550) befindlichen Mobilnetz (500) verwendet werden.

18. Telekommunikationssystem (300) zur Verwendung am Boden, umfassend eine Satellitenstation (310) zum Herstellen von Kommunikation zwischen einem Bodennetz (400) und einem Telekommunikationssystem an Bord eines Schiffs über eine Satellitenverbindung,
**dadurch gekennzeichnet, dass** es auch eine Bodenempfangsbestätigungseinrichtung (320) enthält, die geeignet ist zum Erzeugen und Senden von Empfangsbestätigungssignalen zu einem Bodennetz (400) in Antwort auf ein Endgerät (2), das am Boden befindlich ist und einen von der Bodenstation (300) zu dem Bord-Telekommunikationssystem zu übertragenden Rahmen sendet.

19. Telekommunikationssystem (300) nach Anspruch 18, das eine Basisstationsteuereinheit (20) enthält.

20. Telekommunikationssystem nach Anspruch 19, das auch eine Mobildienst-Schaltzentrale (30) enthält.

21. Telekommunikationssystem nach einem der Ansprüche 18 bis 20, bei dem die Empfangsbestätigungseinrichtung (320) geeignet ist zum Erzeugen eines Empfangsbestätigungssignals gemäß dem MTP2-Protokoll.

22. Telekommunikationssystem nach einem der Ansprüche 18 bis 21, bei dem die Empfangsbestätigungseinrichtung (320) geeignet ist zum Erzeugen und Senden eines Empfangsbestätigungssignals binnen einer Empfangsbestätigungsverzögerung, die kleiner ist als die Fehlfunktionsverzögerung, die durch ein von dem Telekommunikationssystem verwendetes Protokoll vorgesehen ist.

23. Telekommunikationssystem nach Anspruch 22, bei dem die von der Empfangsbestätigungseinrichtung vorgesehene Empfangsbestätigungsverzögerung kleiner als 750 ms ist.

24. Verfahren zum Herstellen von Kommunikation zwischen einer an Bord eines Schiffs befindlichen Mobilstation (1) und einem Bodennetz (400) über eine Satellitenverbindung, umfassend folgende Schritte:
- die Mobilstation (1) sendet einen Rahmen zu einer Basis-Sende/Empfänger-Station (10) des Telekommunikationssystems an Bord des Schiffs,
- das an Bord befindliche Telekommunikationssystem sendet den Rahmen über die Satellitenverbindung zu dem Bodennetz (400),
**dadurch gekennzeichnet, dass** es auch den folgenden Schritt enthält:
- eine Empfangsbestätigungseinrichtung (120), die einen Teil des Bord-Telekommunikationssystems bildet, erzeugt und sendet ein Empfangsbestätigungssignal zu der Basis-Sende/Empfänger-Station (20).

## Revendications

1. Système de télécommunication pour utilisation à bord d'un vaisseau, destiné à permettre l'établissement de communications avec des réseaux au sol (400), le système de télécommunication comprenant au moins une station de base d'émission / réception embarquée (10) destinée à permettre l'établissement de liaisons radio avec des stations mobiles (1) positionnées à bord du vaisseau, ainsi qu'une station satellite embarquée (110) destinée à permettre l'établissement de communications entre le système de télécommunication embarqué et une station au sol (310) par le biais d'une liaison satellite,
**caractérisé en ce qu'**il comprend également un dispositif d'accusé de réception embarqué (120) qui est adapté pour générer et transmettre un signal d'accusé de réception vers la station de base d'émission / réception embarquée (10) en réponse à l'envoi, par une station mobile (1) positionnée à bord du vaisseau, d'une trame destinée à être transmise par le système de télécommunication vers la station au sol (310).

2. Système de télécommunication selon la revendication 1, comprenant un contrôleur de stations de base (20).

3. Système de télécommunication selon la revendication 2, comprenant également un centre de commutation de service mobile (70).

4. Système de télécommunication selon l'une des revendications 1 à 3, dans lequel le dispositif d'accusé de réception (120) est adapté pour générer un signal d'accusé de réception d'établissement de communication en réponse à l'envoi, par la station mobile (1), d'une trame contenant un message d'établissement de communication.

5. Système de télécommunication selon l'une des revendications 1 à 4, dans lequel le dispositif d'accusé de réception (120) est adapté pour générer un signal d'accusé de réception conformément à un protocole MTP2.

6. Système de télécommunication selon l'une des revendications 1 à 4, dans lequel le dispositif d'accusé de réception (120) est adapté pour générer et transmettre un signal d'accusé de réception dans un délai d'accusé de réception qui est inférieur au délai de défaillance prévu par un protocole utilisé par le système de télécommunication.

7. Système de télécommunication selon la revendication 6, dans lequel le délai d'accusé de réception prévu par le dispositif d'accusé de réception est inférieur à 750 ms.

8. Système de télécommunication selon l'une des revendications 1 à 7, comprenant en outre des moyens de commutation (50) qui sont adaptés pour activer ou désactiver le système de télécommunication de façon sélective en fonction de la proximité d'un réseau de télécommunication (500) positionné au sol (550).

9. Système de télécommunication selon la revendication 8, dans lequel les moyens de commutation (50) sont adaptés pour calculer la distance (d) entre la position (x, y) du vaisseau (150) et un point le plus proche (x', y') du sol (550), et pour activer ou désactiver le système de télécommunication de façon sélective en fonction de la distance calculée (d).

10. Système de télécommunication selon la revendication 9, dans lequel les moyens de commutation (50) sont adaptés pour activer le système de télécommunication, ou pour maintenir le système de télécommunication dans un état actif, si la distance (d) entre le vaisseau et le point le plus proche (x', y') au sol (550) est supérieure à un premier seuil.

11. Système de télécommunication selon la revendication 10, dans lequel le premier seuil est de l'ordre de 14 kilomètres.

12. Système de télécommunication selon les revendications 8 à 11, dans lequel les moyens de commutation (50) sont adaptés pour désactiver le système de télécommunication, ou pour maintenir le système de télécommunication dans un état inactif, si la distance (d) entre le vaisseau (150) et le point le plus proche (x', y') au sol (550) est inférieure à un deuxième seuil.

13. Système de télécommunication selon la revendication 12, dans lequel le deuxième seuil est de l'ordre de 12 kilomètres.

14. Système de télécommunication selon la revendication 8, dans lequel les moyens de commutation (50) sont adaptés pour mesurer un niveau d'intensité de signaux porteurs à des fréquences correspondant à des canaux de communication du système de communication, et pour activer ou désactiver le système de télécommunication de façon sélective en fonction du niveau d'intensité mesuré.

15. Système de télécommunication selon la revendication 14, dans lequel les moyens de commutation (50) sont adaptés pour activer le système de télécommunication, ou pour maintenir le système de télécommunication dans un état actif, si le niveau d'intensité du signal porteur est inférieur à un seuil.

16. Système de télécommunication selon l'une des revendications 14 ou 15, dans lequel les moyens de commutation (50) sont adaptés pour désactiver le système de télécommunication, ou pour maintenir le système de télécommunication dans un état inactif, si le niveau d'intensité des signaux porteurs est supérieur à un seuil.

17. Système de télécommunication selon l'une des revendications 1 à 7, comprenant en outre des moyens de commutation (50) qui sont adaptés pour modifier des fréquences de canaux de communication du système de télécommunication, de façon à ce que les fréquences de canaux du système de télécommunication ne coïncident pas avec des fréquences de canaux déjà utilisées par un réseau mobile (500) positionné au sol (550).

18. Système de télécommunication (300) pour utilisation au sol, comprenant une station satellite (310) destinée à permettre l'établissement de communications entre un réseau au sol (400) et un système de télécommunication embarqué à bord d'un vaisseau par le biais d'une liaison satellite,
**caractérisé en ce qu'**il comprend également un dispositif d'accusé de réception au sol (320) qui est adapté pour générer et transmettre des signaux d'accusé de réception vers un réseau au sol (400) en réponse à l'envoi, par un terminal (2) positionné au sol, d'une trame destinée à être transmise par la station au sol (300) vers le système de télécommunication embarqué.

19. Système de télécommunication (300) selon la revendication 18, comprenant un contrôleur de stations de base (20).

20. Système de télécommunication selon la revendication 19, comprenant également un centre de commutation de service mobile (30).

21. Système de télécommunication selon l'une des revendications 18 à 20, dans lequel le dispositif d'accusé de réception (320) est adapté pour générer un signal d'accusé de réception conformément à un protocole MTP2.

22. Système de télécommunication selon l'une des revendications 18 à 21, dans lequel le dispositif d'accusé de réception (320) est adapté pour générer et transmettre un signal d'accusé de réception dans un délai d'accusé de réception qui est inférieur au délai de défaillance prévu par un protocole utilisé par le système de télécommunication.

23. Système de télécommunication selon la revendication 22, dans lequel le délai d'accusé de réception prévu par le dispositif d'accusé de réception est inférieur à 750 ms.

24. Procédé destiné à permettre l'établissement de communications entre une station mobile (1) positionnée à bord d'un vaisseau et un réseau au sol (400), par le biais d'une liaison satellite, le procédé comprenant les étapes suivantes :
- la station mobile (1) envoie une trame vers une station de base d'émission / réception (10) d'un système de télécommunication embarqué à bord du vaisseau ;
- le système de télécommunication embarqué transmet la trame vers le réseau au sol (400) par le biais de la liaison satellite,
**caractérisé en ce qu'**il comprend également l'étape suivante :
- un dispositif d'accusé de réception (120), faisant partie d'un système de télécommunication embarquée, qui génère et transmet un signal d'accusé de réception vers la station de base d'émission / réception (20).
